# EUROPÄISCHE PATENTSCHRIFT

(11) **EP 1 603 663 B1**
(45) Veröffentlichungstag und Bekanntmachung des Hinweises auf die Patenterteilung: **26.05.2010**
(21) Anmeldenummer: 04714317.7
(22) Anmeldetag: 25.02.2004
(51) Int. Cl.: B01D 71/70, B01D 67/00, B01D 69/10, C04B 41/45, B01D 61/02, B01D 69/02

(54) **KERAMISCHE NANOFILTRATIONSMEMBRAN FÜR DIE VERWENDUNG IN ORGANISCHEN LÖSUNGSMITTELN UND VERFAHREN ZU DEREN HERSTELLUNG**
CERAMIC NANOFILTRATION MEMBRANE FOR USE IN ORGANIC SOLVENTS AND METHOD FOR THE PRODUCTION THEREOF
MEMBRANE DE NANOFILTRATION CERAMIQUE DESTINEE A ETRE EMPLOYEE DANS DES SOLVANTS ORGANIQUES ET PROCEDE DE FABRICATION

(30) Priorität: 26.02.2003 DE 10308110
(43) Veröffentlichungstag der Anmeldung: 14.12.2005
(73) Patentinhaber: Hermsdorfer Institut für Technische Keramik e.V., 07629 Hermsdorf (DE)
(72) Erfinder: DUDZIAK, Gregor, 53177 Bonn (DE); HOYER, Thomas, 99438 Bad Berka (DE); NICKEL, Andreas, 58300 Wetter (DE); PUHLFUERSS, Petra, 07616 Buergel (DE); VOIGT, Ingolf, 07743 Jena (DE)
(74) Vertreter: Oehmke, Volker
(86) Internationale Anmeldenummer: PCT/EP2004/001831
(87) Internationale Veröffentlichungsnummer: WO 2004/076041

(56) Entgegenhaltungen:
- EP-A- 0 320 033
- WO-A-99/15262
- DE-A- 4 105 834
- DE-A- 4 200 104
- DE-A- 10 139 559
- US-A- 5 342 521
- US-A- 6 030 632
- US-B1- 6 383 386
- WU C ET AL: "A new inorganic-organic negatively charged membrane: membrane preparation and characterizations" JOURNAL OF MEMBRANE SCIENCE, ELSEVIER SCIENTIFIC PUBL.COMPANY. AMSTERDAM, NL, Bd. 224, Nr. 1-2, 15. Oktober 2003 (2003-10-15), Seiten 117-125, XP004467672 ISSN: 0376-7388

## Beschreibung

Die Erfindung betrifft eine keramische Nanofiltrationsmembran für die Verwendung in organischen Lösungsmitteln sowie ein Verfahren zu deren Herstellung.

Keramische Filterelemente besitzen in der Regel einen asymmetrischen Aufbau, bei dem auf einem porösen keramischen Träger (Support) dünne Membranschichten mit ein oder mehreren Zwischenschichten aufgetragen sind. Nach der Porengröße bzw. dem Rückhaltevermögen unterscheidet man verschiedene Membranfiltrationsbereiche wie Mikrofiltration, Ultrafiltration und Nanofiltration.

Der poröse keramische Träger gibt die äußere Form und die mechanische Stabilität des Filterelementes vor. Übliche Ausführungsformen sind Scheiben, die durch Foliengießen oder Pressen hergestellt werden und Rohre, die in den meisten Fällen steifplastisch extrudiert werden. Nach dem Sinterprozess, der je nach verwendetem keramischen Werkstoff zwischen 1200 °C und 1700 °C liegen kann, erhält man einen offenporigen keramischen Körper. Die Poren werden durch Hohlräume zwischen den Sinterkörnern gebildet (Zwischenkornporen). Es lassen sich je nach verwendeter Ausgangskorngröße und Kornform Porengrößen zwischen 1 µm und 10 µm einstellen.

Keramische Mikrofiltrationsmembranen werden in den meisten Fällen unter Verwendung eng klassierter keramischer Pulver hergestellt. Diese Pulver werden in einem geeigneten Lösungsmittel unter Verwendung von Hilfsstoffen (Dispergatoren) dispergiert. Der so entstehende Schlicker wird mit Lösungen organischer Bindemittel gemischt und anschließend zur Beschichtung des porösen keramischen Trägers eingesetzt. Im Kontakt mit dem porösen Träger dringt das Lösungsmittel in den Träger ein, wobei sich eine dünne keramische Schicht auf der Oberfläche bildet. Diese wird getrocknet und anschließend bei hoher Temperatur je nach verwendeter Feinheit des Pulvers zwischen 800 °C und 1400 °C eingebrannt (A. Burggraaf, K. Keizer, in Inorganic Membranes, ed. R. R. Bhave, Van Nostrand Reinhold, New York, p. 10-63). Mit immer feiner werdenden keramischen Pulvern lassen sich auf diese Weise immer feinporigere Membranen herstellen. Die feinsten erhältlichen Pulver haben eine Teilchengröße von ca. 60-100 nm, woraus sich Membranen mit einer Porengröße von ca. 30 nm herstellen lassen. Dies ist der obere Bereich der Ultrafiltration.

Keramische Ultrafiltrationsmembranen mit niedrigerer Trenngrenze lassen sich über die Sol-Gel-Technik in wässriger Lösung herstellen. Hierzu werden vorzugsweise Metallalkoholate in Wasser vollständig hydrolysiert. Es bilden sich kolloidale Hydroxid- und Oxidhydratteilchen, die durch Zusatz geringer Elektrolytmengen (Mineralsäure oder Alkalilauge) stabilisiert werden können. Diesen sogenannten Solen werden Lösungen organischer Bindemittel zugesetzt und die so entstehenden Lösungen zur Beschichtung verwendet. Als Träger dienen keramische Mikrofiltrationsmembranen oder grobe Ultrafiltrationsmembranen. Das Lösungsmittel der Sole dringt in den porösen Träger ein. Die Konzentrationserhöhung an der Oberfläche führt zu einem starken Viskositätsanstieg und der Bildung eines Gels. Dieses Gel wird anschließend vorsichtig getrocknet und schließlich bei Temperaturen zwischen 400 °C und 1000°C eingebrannt. Auf diesem Wege lassen sich keramische Membranen für den unteren Bereich der Ultrafiltration mit schlitzförmigen Poren und einem Porendurchmesser zwischen 3 nm und 10 nm herstellen (I. Voigt, G. Mitreuter, M. Füting, CfI/Ber. DKG 79 (2002) E39-E44).

Keramische Membranen für die Nanofiltration lassen sich über eine spezielle Form der Sol-Gel-Technik herstellen. Hierzu wird statt Wasser ein organisches Lösungsmittel eingesetzt und die Hydrolyse nur mit einer definierten Menge Wasser unterstöchiometrisch zur Anzahl der hydrolysierbaren Alkoholatgruppen durchgeführt. Gleichzeitig beginnen die gebildeten Hydroxidgruppen unter Wasserabspaltung zu kondensieren. Die so entstehenden Oligomere werden mit zunehmender Kettenlänge im weiteren Kettenwachstum gehemmt, es bildet sich ebenfalls der Zustand eines Sols, der in diesem speziellen Fall auch als polymeres Sol bezeichnet wird (C. J. Brinker, G. W. Scherer, Sol-Gel-Science, Academic Prss, Inc., 1990). Durch eine starke Verdünnung des Sols kann dieser Zustand über mehrere Tage stabilisiert werden. Ein Zusatz von Binder ist auf Grund der polymeren Struktur des Sols nicht erforderlich. Das Prinzip der Schichtbildung ist wiederum vergleichbar mit dem bei den keramischen Schlickern und partikulären Solen. Das Lösungsmittel dringt in die Poren ein, die Viskosität der Oberflächenschicht steigt, es bildet sich ein Gel. Dieses wird getrocknet und anschließend bei Temperaturen zwischen 200 °C und 600°C eingebrannt. Man erhält auf diese Weise zylinderförmige Poren mit einem mittleren Porendurchmesser kleiner 2 nm. Voigt et al. (Proc. of 5th Inter. Conf. on Inorg. Membr. (5th ICIM), 22.-26.07.1998, Nagoya, Japan p. 42-45) stellten auf diese Weise TiO₂-Nanofiltrations-Membranen mit einem mittleren Porendurchmesser von 0,9 nm, einem Wasserfluss von 20 1/(m²·h·bar) und einer molekularen Trenngrenze (90 %iger Rückhalt) in wässriger Lösung von 450 g/mol her (J. Membr. Sci. 174 (2000) 123-133).

WO98/17378 beschreibt eine anorganische Nanofiltrationsmembran, die aus gesinterten Metalloxidteilchen in einer abgestuften Schichtfolge auf einem monolithischen keramischen Mehrkanalträger besteht. Dieser trägt auf den Kanalwänden eine Mikrofiltrationsschicht, diese eine Ultrafiltrationsschicht und diese schließlich eine Nanofiltrationsschicht, deren äquivalenter Porendurchmesser vor der Sinterung im Bereich zwischen 0,5 nm bis 1,5 nm liegt und die eine Trennkante zwischen 100 und 2000 Dalton aufweist. Die Nanofiltrationsmembran besteht vorzugsweise aus Zirkoniumoxid und sie wird vorzugsweise im Sol-Gel-Verfahren durch Hydrolyse im alkoholischen Medium hergestellt. Anwendungsgebiet ist die Aufbereitung von Salzlösungen (beispielsweise NaCl-Lösungen) bei der Regenerierung von Ionentauscherharzen, die bei der Raffination von Rohrzucker eingesetzt werden. Es geht also hier um wäßrige Lösungen, nicht um organische Lösungsmittel.

Nach der Porengröße unterscheidet man Makroporen mit einer Porengröße > 100 nm, Mesoporen mit einer Porengröße zwischen 100 nm und 2 nm und Mikroporen mit einer Porengröße kleiner 2 nm. Keramische Ultrafiltrationsmembranen besitzen demnach vorzugsweise Mesoporen, keramische Nanofiltrationsmembranen Mikroporen.

Untersucht man die beschriebenen Nanofiltrationsmembranen bezüglich ihres Trennverhaltens in organischen Lösungsmitteln, so stellt man überraschend fest, dass der Fluss im Vergleich zu Wasser stark absinkt. Bei den TiO₂-Membranen mit einer Porengröße von 0,9 nm wird ein Fluss von < 5 1/(m²·h·bar) gemessen. Gleichzeitig steigt die Trenngrenze auf > 2000 g/mol an.

Um keramische Nanofiltrationsmembranen für die Anwendung im organischen Lösungsmittel zu erhalten, wurde versucht, den Fluss der organischen Lösungsmittel durch die Membranporen unter Verwendung von Mischoxiden zu verbessern.

Guizard et al. (Desalination 147 (2002) 275-280) untersuchten die Mischoxide SiO₂/TiO₂, Al₂O₃/ZrO₂ und SiO₂/ZrO₂. Sie erhielten mikroporöse keramische Membranen mit Porenradien ≤ 1 nm mit kaum verbessertem Penneationsverhalten.

Tsuru et al. (J. Coll. Interf. Sci. 228 (2000) 292-296**,** J. Membr. Sci. 185 (2001) 253-261) untersuchten das Verhalten von SiO₂/ZrO₂-Membranen, hergestellt über einen Sol-Gel-Prozess. Sie variierten die Porengröße zwischen 1 nm und 5 nm. Auch dies führte nicht zu einem Fluss, wie er im wässrigen Lösungsmittel erreicht wurde.

Eigene Untersuchungen ergaben, dass die Ursache für dieses Verhalten in der starken Hydrophilie der keramischen Mikroporen besteht, die dadurch hervorgerufen wird, dass sich Wasser bzw. OH-Gruppen an die oxidische Oberfläche anlagern. Diese Mikroporen sind für organische Lösungsmittelmoleküle nicht durchlässig. Ein Transport findet über größere Poren und/oder Defekte statt, die nur einen geringen Anteil am Gesamtporenvolumen haben. Hierdurch sinkt der Fluss im Vergleich zum Wasserfluss. Die Rückhaltung dieser größeren Poren bzw. Defekte liegt deutlich oberhalb der Mikroporen.

Gestaltet man die Mikroporen hydrophob, so sollte die Permeation von Wasser behindert und möglicher Weise völlig eingeschränkt werden. Überraschenderweise verbessert sich der Fluss organischer Lösungsmittel und die Rückhaltung in organischen Lösungsmitteln gelöster Moleküle verbessert sich gegenüber der hydrophilen NF-Membran nicht.

WO92/06775 beansprucht eine Nanofiltrationsmembran, bei der ein Träger aus einer anorganischen Substanz mit einer ersten Schicht aus einem porösen anorganischen Material mit einem Porenradius kleiner 10 nm beschichtet ist und eine zweite aktive Schicht mit einer Dicke von 0,1 µm-1 µm enthält, die aus einem organischen Polymer besteht.

WO99/61140 beschreibt ein Verfahren zur Herstellung hydrophober anorganischer Membranen durch ein Sol-Gel-Verfahren, bei dem Alkoholate mit mindestens einer nichthydrolysierbaren Kohlenwasserstoff-Gruppe Verwendung finden. Diese werden dem Hydrolyseprozess zugegeben, nachdem die Hydrolyse der reinen Alkoholate bis zu einem bestimmtem Punkt fortgeschritten ist. Als Beispiel für Alkoholate mit nichthydrolysierbaren Kohlenwasserstoffgruppen wird Methyltriethoxysilan beschrieben. Es entsteht ein Sol, dass die Hydrophobierungskomponente enthält. Im Ergebnis erhält man mikroporöse hydrophobe Membranen mit Porengrößen von 0,5 nm und 0,7 nm, die für die Gastrennung eingesetzt werden können.

Gemäß der DE 101 39559 wird eine Polymermembran gestützt in den Poren eines Keramischen Trägers beschrieben

WO99/29402 beschreibt eine anorganische Filtermembran, die aus einem

Support beschichtet mit einer Membran besteht, die kovalent gebundene organo-mineralische oder mineralische Titanium- oder Zirkoniumgruppen enthält.

Die US 6 383 386-B offenbart die Modifizierung eines Keramischen Trägers mit einem Hydrophobierungsmittel

Der Erfindung liegt die Aufgabe zugrunde, unter Vermeidung der Mängel und der komplizierten Verfahrensweisen des Standes der Technik eine keramische Nanofiltrationsmembran für die Verwendung in organischen Lösungsmitteln sowie ein Verfahren zu deren Herstellung zu schaffen.

Diese Aufgabe wird durch die in Patentansprüchen beschriebene Erfindung gelöst.

Im Gegensatz zum geschilderten Stand der Technik werden nach vorliegender Erfindung die Poren mesoporöser keramischer Membranen, die üblicherweise für die Ultrafiltration eingesetzt werden, durch nachträgliche Behandlung mit einem Hydrophobierungsmittel modifiziert. Die Porengröße liegt dabei zwischen 2 nm und 10 nm, vorzugsweise zwischen 2 nm und 5 nm. Die Membran besteht aus Oxiden des Aluminium, Silizium, Zirkonium oder Titanium oder Mischungen derselben. Als Hydrophobierungsmittel wird vorzugsweise ein Silan der allgemeinen Formel R₁R₂R₃R₄Si verwendet, wobei eine der Gruppen R₁-R₄ hydrolysierbare Gruppen wie z.B. -Cl, -OCH₃ oder -O-CH₂-CH₃ sind. Die verbleibenden Gruppen sind nicht hydrolysierbare Gruppe wie z.B. Alkylgruppen, Phenylgruppen, die zur Erhöhung der hydrophoben Wirkung zumindest teilweise fluoriert sein können. Die Bindung des Hydrophobierungsmittels an die Membranoberfläche erfolgt durch Kondensationsreaktion der hydrolysierbaren Gruppen mit OH-Gruppen an der Oberfläche der oxidischen Membran nach folgender Reaktionsgleichung:

Zr-OH + Cl-SiR₁R₂R₃ ⇒ Zr-O-SiR₁R₂R₃ + HCl

Die erfindungsgemäße Verwendung eines Hydrophobierungsmittels mit nur einem hydrolysierbaren Substituenten führt dazu, dass eine monomolekulare Schicht angelagert wird, ohne dass die Moleküle des Hydrophobierungsmittels untereinander reagieren.

Die Modifizierung der mesoporösen keramischen Membranen unter Verwendung der beschriebenen Hydrophobierungsmittel kann entweder in flüssiger Phase durch Tränken der Membran in einer Lösung des Hydrophobierungsmittels erfolgen, oder aber in gasförmiger Phase durch Anlegung eines Vakuums oder Verwendung eines Trägergases.

Durch Anwendung einer Druckdifferenz zwischen Vorder- und Rückseite der Membran kann das Eindringen des Hydrophobierungsmittels unterstützt werden. Zur besseren Fixierung des Hydrophobierungsmittels kann zum Schluss eine thermische Behandlung zwischen 100°C und 400°C, vorzugsweise zwischen 150 °C und 300 °C, angewendet werden.

Die Erfindung wird nachstehend an drei Ausführungsbeispielen näher erläutert. Die beigefügten Zeichnungen stellen dar:

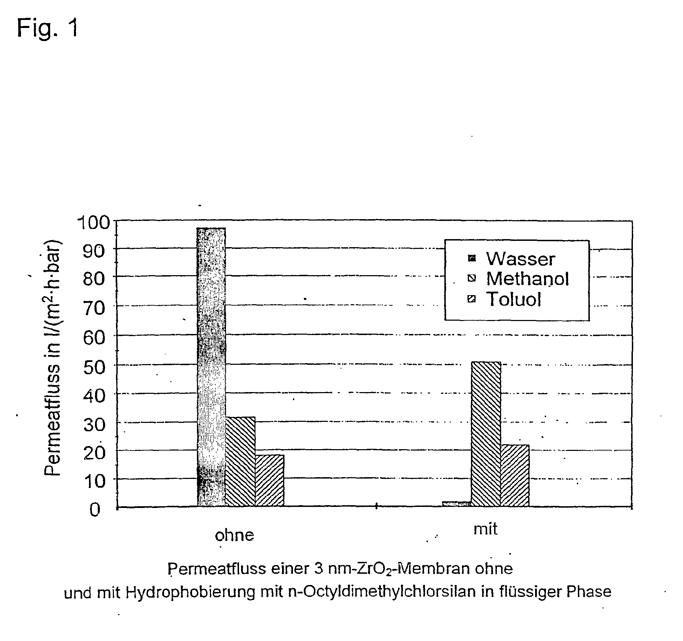

- Fig. 1:: Permeatfluß einer 3 nm-ZrO₂-Membra ohne und mit erfindungsgemäße Hydrophobierung mit n-Octyldimethylchlorsilan in flüssiger Phase (Beispiel 1),

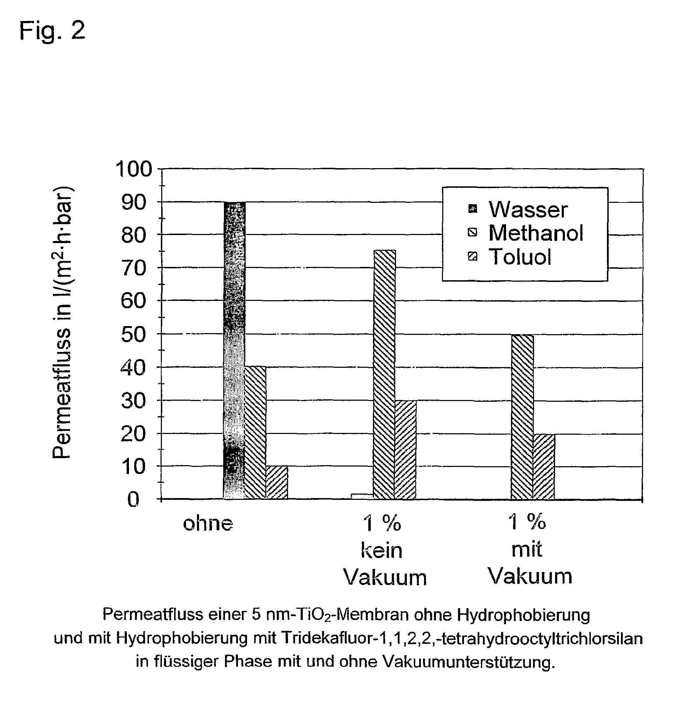

- Fig. 2:: Permeatfluß einer 5 nm-ZrO₂-Membran ohne und mit nicht erfindungsgemäßer Hydrophobierung mit Tridekafluor-1,1,2,2,-tetrahydrooctyltrichlorsilan in flüssiger Phase mit und ohne Vakuumunterstützung (Beispiel 2) und

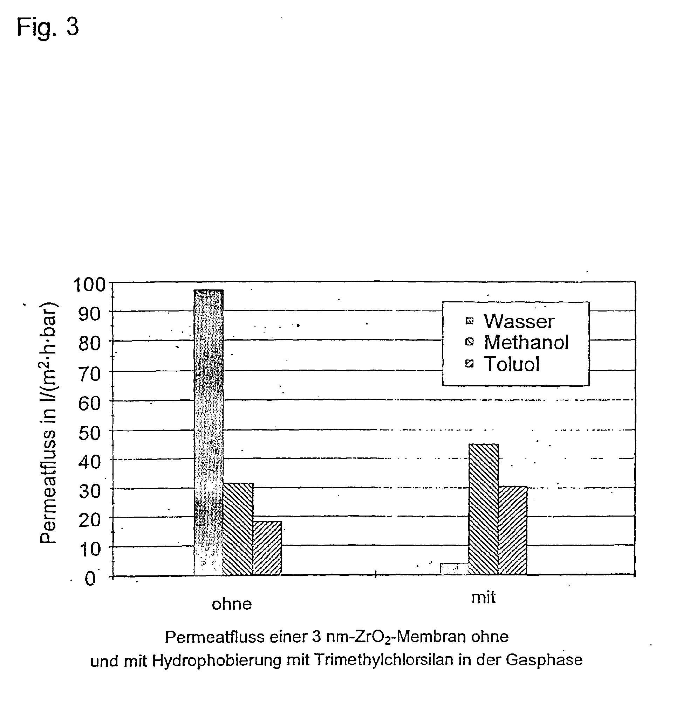

- Fig. 3:: Permeatfluß einer 3 nm-ZrO₂-Membran ohne und mit erfindungsgemäße Hydrophobierung mit Trimethylchlorsilan in der Gasphase (Beispiel 3).

### Beispiel 1: Hydrophobierung mit n-Octyldimethylchlorsilan in flüssiger Phase

Bei n-Octyldimethylchlorsilan handelt es sich um ein Molekül mit einer hydrolysierbaren Gruppe (-C1), zwei nicht hydrolysierbaren Methylgruppen (-CH₃) und einer nichthydrolysierbaren Octylgruppe (-(CH₂)₇-CH₃). 1 g dieser Verbindung wird in 100 g n-Heptan gelöst.

Eine mesoporöse ZrO₂-Membran (Hersteller inocermic GmbH) mit einer mittleren Porengröße von 3 nm wird in diese Lösung eingetaucht. Nach einer Verweilzeit von 2 min wird die Membran aus der Lösung herausgenommen, 10 min an Luft getrocknet und anschließend 30 min bei 175 °C im Trockenschrank behandelt.

Die Hydrophobierung zeigt sich durch ein anderes Benetzungsverhalten gegenüber Wasser. Die unbehandelte ZrO₂-Membran wird so gut benetzt, dass ein Randwinkel < 10° gemessen wird. Nach der Hydrophobierung zeigt die Oberfläche einen Randwinkel von 80°.

Die Untersuchung des Lösungsmittelflusses erfolgt im Cross-Flow-Verfahren bei einem Transmembrandruck von 3 bar und einer Überströmgeschwindigkeit von 2 m/s. Die Hydrophobierung mit n-Octyldimethylchlorsilan führt zu einer starken Herabsetzung des Wasserflusses von 95 l/(m²·h·bar) auf 1,5l/(m²·h·bar). Im Gegensatz dazu steigt der Methanolfluss von 32 l/(m²·h·bar) auf 51 l/(m²·h·bar) und der Toluolfluss von 18 l/(m²·h·bar) auf 22 l/(m²·h·bar).

Trenngrenzenmessungen mit Polystyrolstandards in Toluol bei einem Transmembrandruck von 3 bar und einer Überströmgeschwindigkeit von 2 m/s ergeben für die nicht hydrophobierte 3 nm-ZrO₂-Membran eine Trenngrenze (90 %iger Rückhalt) von 1025 g/mol. Nach der Hydrophobierung sinkt die Trenngrenze auf 660 g/mol.

### Vergleichsbeispiel 2: Hydrophobierung mit Tridekafluor-1,1,2,2,-tetrahydrooctyltrichlorsilan in flüssiger Phase

Bei Tridekafluor-1,1,2,2,-tetrahydrooctyltrichlorsilan handelt es sich um ein Molekül mit drei hydrolysierbaren Gruppen (-C1) und einer langkettigen, stark fluorierten, nicht hydrolysierbaren Gruppe. 1 g dieser Verbindung wird in einer Mischung von 50 g Ethanol (99,8 %) und 50 g Heptan gelöst.

Eine mesoporöse TiO₂-Membran mit einer mittleren Porengröße von 5 nm (Hersteller inocermic GmbH) wird in diese Lösung eingetaucht. Nach einer Verweilzeit von 2 min wird die Membran aus der Lösung herausgenommen, 10 min an Luft getrocknet und anschließend 30 min bei 175 °C im Trockenschrank behandelt.

Die Hydrophobierung zeigt sich durch ein anderes Benetzungsverhalten gegenüber Wasser. Die unbehandelte TiO₂-Membran wird so gut benetzt, dass ein Randwinkel < 10° gemessen wird. Nach der Hydrophobierung zeigt die Oberfläche einen Randwinkel von 120°.

Die Untersuchung des Lösungsmittelflusses erfolgt im Cross-Flow-Verfahren bei einem Transmembrandruck von 3 bar und einer Überströmgeschwindigkeit von 2m/s. Die Hydrophobierung mit Tridekafluor-1,1,2,2,-tetrahydrooctyltrichlorilan führt zu einer starken Herabsetzung des Wasserflusses von 90 l/(m²·h·bar) auf 2 l/(m²·h·bar). Im Gegensatz dazu steigt der Methanolfluss von 40 l/(m²·h·bar) auf 75 l/(m²·h·bar) und der Toluolfluss von 10 l/(m²·h·bar) auf 30 l/(m²·h·bar).

Trenngrenzenmessungen mit Polystyrolstandards in Toluol bei einem Transmembrandruck von 3 bar und einer Überströmgeschwindigkeit von 2 m/s von ergeben für die nicht hydrophobierte 5 nm-TiO₂-Membran eine Trenngrenze (90 %iger Rückhalt) von 1800 g/mol. Nach der Hydrophobierung sinkt die Trenngrenze auf 1200 g/mol.

Die Hydrophobierung kann dadurch unterstützt werden, dass man auf der Membranrückseite Vakuum anlegt und das Hydrophobierungsmittel in die Membranporen hereinzieht. Legt man bei der Hydrophobierung mt 1 %iger n-Octyldimethylchlorsilan-Lösung in n-Heptan ein Vakuum von 60 mbar an, so lässt sich unter den beschriebenen Versuchsbedingungen kein Wasserfluss messen. Der Methanolfluss beträgt 50 l/(m²·h·bar), der Toluolfluss 20 l/(m²·h·bar).

### Beispiel 3: Hydrophobierung mit Trimethylchlorsilan in der Gasphase

Trimethylchlorsilan besitzt eine hydrolysierbare Gruppe (-Cl) und drei Methylgruppen, die zur Hydrophobierung genutzt werden.

Eine Glasschale mit Trimethylchlorsilan wird auf den Boden eines verschließbaren Behälters gestellt. Die Einwaage an Trimethylchlorsilan beträgt 2 g pro Quadratdezimeter zu beschichtender Oberfläche. Mesoporöse ZrO₂-Membranen (Hersteller inocermic GmbH) einer Porengröße von 3 nm werden in dem Behälter, oberhalb des Hydrophobierungsmittels so angeordnet, dass kein Kontakt zum Trimethylchlorsilan besteht. Der Behälter wird verschlossen und mittels einer Membranpumpe bis zu einem Druck von ca. 250 mbar evakuiert, bei dem Trimethylchlorsilan bei Raumtemperatur zu sieden beginnt. Die Pumpe wird abgeschaltet. Durch verdampfendes Trimethylchlorsilan steigt der Druck im Behälter. Nach einer Wartezeit von 10 min wird erneut evakuiert. Insgesamt wird diese Prozedur dreimal (bei Raumtemperatur) wiederholt. Anschließend werden die Membranen 1 h bei 150 °C an Luft getempert.

Die Hydrophobierung zeigt sich durch ein anders Benetzungsverhalten gegenüber Wasser. Die unbehandelte ZrO₂-Membran benetzt so gut, dass ein Randwinkel < 10° gemessen wird. Nach der Hydrophobierung zeigt die Oberfläche einen Randwinkel von 40°.

Die Untersuchung des Lösungsmittelflusses erfolgt im Cross-Flow-Verfahren bei einem Transmembrandruck von 3 bar und einer Überströmgeschwindigkeit von 2 m/s. Die Hydrophobierung mit Trimethylchlorsilan führt zu einer starken Herabsetzung des Wasserflusses von 95 l/(m²·h·bar) auf 4,5 l/(m²·h·bar). Im Gegensatz dazu steigt der Methanolfluss von 32 l/(m²·h·bar) auf 45 l/(m²·h·bar) und der Toluolfluss von 18 l/(m²·h·bar) auf 30 l/(m²·h·bar).

Trenngrenzenmessungen mit Polystyrolstandards in Toluol bei einem Transmembrandruck von 3 bar und einer Überströmgeschwindigkeit von 2 m/s ergeben für die nicht hydrophobierte 3 nm-ZrO₂-Membran eine Trenngrenze (90 %iger Rückhalt) von 1025 g/mol. Nach der Hydrophobierung sinkt die Trenngrenze auf 800 g/mol.

## Patentansprüche

1. Keramische Membran für die Verwendung in organischen Lösungsmitteln, **dadurch gekennzeichnet, dass** eine mesoporöse keramische Membran mit einem Hydrophobierungsmittel mit nur einem hydrolysierbaren Substituenten zum Zwecke der Monolayerbildung modifiziert ist, so dass die ohne die Einlagerung mit dem Hydrophobierungsmittel Ultrafiltrationseigenschaften aufweisende mesoporöse keramische Membran Nanofiltrationseigenschaften aufweist, wobei die Membran aus einem Metalloxid besteht und die Porengröße zwischen 2 nm und 10 nm beträgt.

2. Keramische Membran nach Anspruch 1, **dadurch gekennzeichnet, dass** die Porengröße zwischen 2 nm und 5 nm beträgt.

3. Keramische Membran nach Anspruch 1 bis 2, **dadurch gekennzeichnet, dass** das Metalloxid TiO₂, ZrO₂, Al₂O₃ oder SiO₂ oder Mischungen zweier oder mehrerer dieser Oxide ist.

4. Keramische Membran nach Anspruch 1 bis 3, **dadurch gekennzeichnet, dass** das Hydrophobierungsmittel ein Silan der allgemeinen Formel R₁R₂R₃R₄Si ist.

5. Keramische Membran nach Anspruch 4, **dadurch gekennzeichnet, dass** eine der Gruppen R₁-R₄ hydrolysierbare Gruppen wie z.B. -Cl, -OCH₃ oder -O-CH₂-CH₃ sind.

6. Keramische Membran nach Anspruch 4, **dadurch gekennzeichnet, dass** drei der Gruppen R₁-R₄ nicht hydrolysierbare Gruppen wie z.B. Alkylgruppen, Phenylgruppen sind.

7. Keramische Membran nach Anspruch 6, **dadurch gekennzeichnet, dass** zur Erhöhung der hydrophoben Wirkung mindestens eine der nicht hydrolysierbaren Substituenten zumindest teilweise fluoriert ist.

8. Verfahren zur Herstellung einer keramischen Membran nach einem der bisherigen Ansprüche, **dadurch gekennzeichnet, dass**
die mesoporöse keramische Membran mit einem Hydrophobierungsmittel mit nur einem hydrolysierbaren Substituenten behandelt wird, so dass die mesoporöse keramische Membran Nanofiltrationseigenschaften erhält.

9. Verfahren nach Anspruch 8, **dadurch gekennzeichnet, dass**
die Modifizierung der Poren durch Tränken mit dem Hydrophobierungsmittel erfolgt.

10. Verfahren nach Anspruch 8, **dadurch gekennzeichnet, dass**
das Eindringen des Hydrophobierungsmittels durch Druckdifferenz zwischen Vorder- und Rückseite der Membran unterstützt wird.

11. Verfahren nach Anspruch 8, **dadurch gekennzeichnet, dass**
die Modifizierung der Poren mit dem Hydrophobierungsmittel aus der Gasphase erfolgt.

12. Verfahren nach einem der Ansprüche 8 bis 11, **dadurch gekennzeichnet, dass** nach der Modifizierung der Poren mit dem Hydrophobierungsmittel eine thermische Behandlung zwischen 100°C und 400°C, vorzugsweise zwischen 150°C und 300°C durchgeführt wird.

## Claims

1. A ceramic membrane for use in organic solvents, **characterised in that** a mesoporous ceramic membrane is modified using a hydrophobing agent comprising only one hydrolysable substituent for the purpose of monolayer formation so as to impart nanofiltration properties to said mesoporous ceramic membrane, which has ultrafiltration properties without the incorporation of the hydrophobing agent, said membrane consisting of a metallic oxide and having a pore size of between 2 nm and 10 nm.

2. The ceramic membrane according to claim 1, **characterised in that** the pore size is between 2 nm and 5 nm.

3. The ceramic membrane according to claims 1 and 2, **characterised in that** the metallic oxide is TiO₂, ZrO₂, Al₂O₃ or SiO₂, or mixtures of two or more of these oxides.

4. The ceramic membrane according to claims 1 to 3, **characterised in that** the hydrophobing agent is a silane of the general formula R₁R₂R₃R₄Si.

5. The ceramic membrane according to claim 4, **characterised in that** one of the groups R₁-R₄ is a hydrolysable group, such as e.g. -Cl, -OCH₃, or -O-CH₂-CH₃.

6. The ceramic membrane according to claim 4, **characterised in that** three of the groups R₁-R₄ are non-hydrolysable groups, such as e.g. alkyl groups or phenyl groups.

7. The ceramic membrane according to claim 6, **characterised in that** at least one of the non-hydrolysable substituents is at least partially fluorinated so as to increase the hydrophobic effect.

8. A method for producing a ceramic membrane according to any one of the previous claims, **characterised in that** the mesoporous ceramic membrane is treated with a hydrophobing agent comprising only one hydrolysable substituent, so as to impart nanofiltration properties to said mesoporous ceramic membrane.

9. The method according to claim 8, **characterised in that** modification of the pores is effected by impregnation with the hydrophobing agent.

10. The method according to claim 8, **characterised in that** the penetration of the hydrophobing agent is aided by a pressure differential between the front and rear surfaces of the membrane.

11. The method according to claim 8, **characterised in that** modification of the pores is effected using the hydrophobing agent from the gaseous phase.

12. The method according to any one of claims 8 to 11, **characterised in that** a thermal treatment is carried out at between 100°C and 400°C, preferably between 150°C and 300°C, after modification of the pores using the hydrophobing agent.

## Revendications

1. Membrane céramique destinée à être employée dans des solvants organiques, **caractérisée en ce qu'**une membrane céramique mésoporeuse est modifiée au moyen d'un agent hydrophobant comprenant un seul substituant hydrolysable dans le but de former une monocouche, de sorte que ladite membrane céramique mésoporeuse, qui possède des caractéristiques d'ultrafiltration sans inclusion dudit agent hydrophobant, ait des caractéristiques de nanofiltration, ladite membrane étant constituée d'un oxyde métallique et présentant une taille des pores de 2 nm à 10 nm.

2. Membrane céramique selon la revendication 1, **caractérisée en ce que** la taille des pores est de 2 nm à 5 nm.

3. Membrane céramique selon les revendications 1 et 2, **caractérisée en ce que** l'oxyde métallique est le TiO₂, le ZrO₂, le Al₂O₃ ou le SiO₂, ou est constitué de melanges de deux ou plus de ces oxydes.

4. Membrane céramique selon les revendications 1 à 3, **caractérisée en ce que** l'agent hydrophobant est un silane de la formule générale R₁R₂R₃R₄Si.

5. Membrane céramique selon la revendication 4, **caractérisée en ce que** l'un des groupes R₁-R₄ est un groupe hydrolysable, tel que -Cl, -OCH₃, ou -O-CH₂-CH₃, par exemple.

6. Membrane céramique selon la revendication 4, **caractérisée en ce que** parmi les groupes R₁-R₄ il y a trois qui sont des groupes non hydrolysables, tels que des groupes alkyl ou des groupes phényl, par exemple.

7. Membrane céramique selon la revendication 6, **caractérisée en ce qu'**au moins un des substituants non hydrolysables est au moins partiellement fluoré afin d'augmenter l'effet hydrophobe.

8. Procédé de fabrication d'une membrane céramique selon l'une quelconque des revendications précédantes, **caractérisé en ce que** la membrane céramique mésoporeuse est traitée avec un agent hydrophobant comprenant un seul substituant hydrolysable de manière à apporter à ladite membrane céramique mésoporeuse des caractéristiques de nanofiltration.

9. Procédé selon la revendication 8, **caractérisé en ce que** la modification des pores est effectuée par imprégnation avec l'agent hydrophobant.

10. Procédé selon la revendication 8, **caractérisé en ce que** la pénétration de l'agent hydrophobant est aidée par une différence de pression entre la face avant et la face arrière de ladite membrane.

11. Procédé selon la revendication 8, **caractérisé en ce que** la modification des pores est effectuée par l'agent hydrophobant de la phase gazeuse.

12. Procédé selon l'une quelconque des revendications 8 à 11, **caractérisé en ce qu'**un traitement thermique est réalisé à des températures entre 100°C et 400°C, de préférence entre 150°C et 300°C, après la modification des pores par l'agent hydrophobant.
